# EUROPÄISCHE PATENTSCHRIFT

(11) **EP 3 283 716 B1**
(45) Veröffentlichungstag und Bekanntmachung des Hinweises auf die Patenterteilung: **13.03.2019**
(21) Anmeldenummer: 16715843.5
(22) Anmeldetag: 08.04.2016
(51) Int. Cl.: E04H 12/16, E04C 5/16

(54) **SPANNSEILFÜHRUNG IN EINEM WINDENERGIEANLAGENTURM**
TENSION CORD GUIDE IN A WIND TURBINE TOWER
GUIDE DE CÂBLES TENDEURS DANS UN MÂT D'ÉOLIENNE

(30) Priorität: 14.04.2015 DE 102015206668
(43) Veröffentlichungstag der Anmeldung: 21.02.2018
(73) Patentinhaber: Wobben Properties GmbH, 26607 Aurich (DE)
(72) Erfinder: KERSTEN, Roy, 39291 Hohenwarthe (DE)
(74) Vertreter: Eisenführ Speiser
(86) Internationale Anmeldenummer: PCT/EP2016/057745
(87) Internationale Veröffentlichungsnummer: WO 2016/166026

(56) Entgegenhaltungen:
- EP-B1- 1 262 614
- DE-A1- 3 806 759
- DE-A1- 4 001 577

## Beschreibung

Die vorliegende Erfindung betrifft eine Vorrichtung zum Führen von Spannseilen in einem Turm einer Windenergieanlage. Diese Vorrichtung kann auch synonym als Spannseilführung bezeichnet werden. Die vorliegende Erfindung betrifft auch eine Windenergieanlage mit wenigstens einer solchen Vorrichtung. Außerdem betrifft die vorliegende Erfindung ein Verfahren zum Errichten eines Turms einer Windenergieanlage. Die Erfindung betrifft auch einen Turm einer Windenergieanlage.

Windenergieanlagen sind bekannt und moderne Windenergieanlagen werden üblicherweise auf speziellen Türmen, also Windenergieanlagentürmen errichtet. Grundsätzlich ist zu unterscheiden zwischen Stahltürmen, Betontürmen und Mischtürmen, die meist im unteren Bereich aus Beton aufgebaut sind und im oberen Bereich einen Stahlturmabschnitt aufweisen.

Solche Betontürme oder Türme mit Betonabschnitten werden häufig, anders als beispielsweise bei Fernsehtürmen üblich ist, aus Betonfertigsegmenten gebaut und mit Spannseilen verspannt. Besonders auf solche Türme oder Turmabschnitte aus Betonfertigteilen bezieht sich die vorliegende Erfindung.

Eine Möglichkeit, die Verspannung mit Spannseilen vorzunehmen besteht darin, die Spannseile außerhalb der Turmwandung, aber innerhalb des Turms zu führen. Eine grundsätzliche Möglichkeit hierzu wird in dem Patent EP 1 262 614 B1 beschrieben. Die Spannseile sind dann im Grunde von innen im Turm sichtbar und auch zugänglich. Hierdurch kann ein Turm auf einfache Art und Weise besonders vom Turmkopf bis zum Spannkeller verspannt werden. Rein vorsorglich wird hier darauf hingewiesen, dass nachfolgende Ausführungen zum Verspannen eines Betonturms auch grundsätzlich sinngemäß für das Verspannen eines Betonturmabschnitts eines Mischturms zu verstehen sind.

Jedenfalls sind es regelmäßig sehr große Höhen, über die solche Spannseile gezogen werden. Es kann dann das Problem auftreten, dass diese Spannseile schwingen können und/oder die Turmwandung berühren können. Das ist besonders dann der Fall, wenn der Turm in vertikaler Richtung eine konkave Form aufweist. Dann hat er nämlich in vertikaler Richtung zum Turminneren eine Wölbung, also eine nach innen gerichtete Wölbung und an der würden solche Spannseile anliegen. Durch ihre Bewegung besteht die Gefahr, dass Turmwandung und/oder das Spannseil beschädigt werden.

Dafür wird in dem oben genannten europäischen Patent EP 1 262 614 B1 gezeigt, dass Befestigungselemente im Turm angeordnet sein können, um die Spannseile zu führen. Das erfolgt dort beispielsweise für Viererbündel. Dort sind vier Spannseile in eine Art Klammer oder Aufnahme an der Turmwandung geführt, was eine Berührung des Turms aber auch eine Bewegung der Spannseile in Umfangsrichtung verhindert.

Problematisch dabei ist, dass besonders durch Fertigungstoleranzen die Position jedes Spannseils in Umfangsrichtung gesehen vorher nicht genau bekannt ist. Wird das Spannseil nun in einer dort beschriebenen Befestigung geführt und dann gespannt, können ggf. erhebliche Kräfte in Umfangsrichtung auftreten. Solche Kräfte müssen die Befestigung dort aufnehmen können. Entsprechend müsste die Befestigung dafür ausgelegt sein und auch die Verankerung in der Turmwandung müsste für solche Kräfte ausgelegt sein.

Der vorliegenden Erfindung liegt somit die Aufgabe zugrunde, zumindest eines der beschriebenen Probleme zu adressieren. Insbesondere soll eine Lösung zum Führen von Spannseilen in einem Windenergieanlagenturm geschaffen werden, die auch Fertigungstoleranzen ausgleichen kann. Zumindest soll zu bisherigen Lösungen eine alternative Lösung vorgeschlagen werden.

Erfindungsgemäß wird eine Vorrichtung zum Führen von Spannseilen gemäß Anspruch 1 vorgeschlagen.

Diese Vorrichtung zum Führen von Spannseilen in einem Turm einer Windenergieanlage umfasst wenigstens einen Führungssattel und eine Sattelaufnahme. Der Führungssattel ist dazu vorgesehen, in dem Turm zwischen einer Turmwand und wenigstens einem der Spannseile angeordnet zu werden, so dass dieses wenigstens eine Spannseil dann an dem Führungssattel anliegt und dadurch mittels des Führungssattels an der Turmwand geführt wird. Veranschaulichend ausgedrückt wird das Spannseil hierbei auch gegen den Führungssattel nach außen in Richtung auf die Turmwand drücken. Hierdurch wird das Spannseil gleichwohl geführt, ohne dass der Führungssattel das Spannseil formschlüssig in Umfangsrichtung halten muss.

Vorzugsweise kann ein solcher Führungssattel auch dazu verwendet und eingesetzt werden, dass das betreffende Spannseil in vertikaler Richtung ein wenig umgeleitet wird bzw. umgelenkt wird. Dies ist besonders für konkave Türme von Bedeutung, die also in vertikaler Richtung gesehen nach innen gewölbt sind. Beispielsweise kann hier eine Turmwandung in vertikaler Richtung bezogen auf eine senkrechte Mittelachse des Turms eine e-Funktion oder eine Hyperbelfunktion aufweisen. Wenn dann das Spannkabel vom Turmkopf oder zumindest vom oberen Ende des Betonturmabschnitts nach unten zum Turmfuß, insbesondere zum Spannkeller geführt wird, müsste es zumindest teilweise an einer solchen nach innen gerichteten Wölbung entlanggeführt bzw. umgelenkt werden. Hier kommt nun ein solcher Führungssattel zum Einsatz, der das Spannseil somit von oben kommend nach unten und etwas nach außen umlenkt.

Zum Befestigen des Führungssattels an der Turmwand ist eine Sattelaufnahme vorgesehen. Der Führungssattel kann dabei in seiner Position in Umfangsrichtung entlang der Sattelaufnahme verändert werden, um an die Position des wenigstens einen Spannseils angepasst zu werden, das er führen soll. Somit kann besonders beim Errichten des Turms bereits die Sattelaufnahme und ggf. auch schon zusammen mit dem Führungssattel zum Führen und insbesondere auch Umlenken wenigstens eines Spannseils an der Turmwandung innen angeordnet werden. Wenn dann die Spannseile angeordnet und zumindest teilweise auch schon gespannt werden, wird dann erkennbar, inwieweit besonders Fertigungstoleranzen zu einer Verschiebung der Position des Spannseils in Umfangsrichtung im Vergleich zur angenommenen Position verändert ist. Hierauf kann nun der Führungssattel angepasst werden, indem er in seiner Position in Umfangsrichtung verändert wird.

Vorzugsweise weist der Führungssattel im Wesentlichen eine flache Auflagefläche auf, an der das jeweilige, wenigstens eine Spannseil zur Führung anliegt, wobei keine Begrenzungen in Umfangsrichtung, also bezogen auf den Turm, vorgesehen sind. Hierdurch kann eine größere Anpassung an die Position des wenigstens einen Spannseils in Umfangsrichtung durch das Anpassen der Position des Führungssattels erfolgen, wohingegen kleinere Anpassungen durch einen entsprechend breiten Führungssattel, nämlich eine entsprechend breite Auflagefläche des Führungssattels, ausgeglichen bzw. toleriert werden können.

Vorzugsweise ist der Führungssattel in Umfangsrichtung entlang der Sattelaufnahme verschiebbar. Zum Ändern der Position des Führungssattels in Umfangrichtung kann dieser also einfach in diese Richtung verschoben werden.

Als eine bevorzugte Ausführungsform wird hierzu vorgeschlagen, dass die Sattelaufnahme zwei Führungsschienen aufweist, bzw. aus zwei Führungsschienen besteht, um den Führungssattel verschiebbar aufzunehmen. Insbesondere weist die Sattelaufnahme dazu eine obere und eine untere Führungsschiene auf, um den Führungssattel im Wesentlichen in seinem oberen und unteren Bereich zu befestigen. Die Führungsschienen können dabei beispielsweise bogenförmige Langlöcher aufweisen, in denen der Führungssattel befestigt und verschiebbar geführt werden kann. Sobald die gewünschte Position für den Führungssattel feststeht, kann er in solchen bogenförmigen Langlöchern, oder ähnlicher Aufnahme, auch fixiert werden, um dann eine unerwünschte Verschiebung in Umfangsrichtung zu vermeiden.

Im Übrigen ist die Sattelaufnahme selbst insbesondere direkt am Turm befestigt und kann dadurch den Führungssattel auf einfache und variable Art und Weise am Turm befestigen.

Vorzugsweise weisen die obere und die untere Führungsschiene unterschiedliche Radien, nämlich unterschiedliche Krümmungsradien auf, um sich dadurch in unterschiedlichen Höhen im Turm dort an den jeweiligen Turmradius anzupassen und dabei gleichwohl eine Verschiebbarkeit des Führungssattels in Umfangsrichtung zu ermöglichen. Dadurch kann auch bei Anordnung des Führungssattels und/oder der Sattelaufnahme in einem konischen Abschnitt des Turms eine Variation, insbesondere Verschiebbarkeit des Führungssattels in Umfangsrichtung erreicht werden.

Vorzugsweise ist die Sattelaufnahme zum Befestigen mehrerer Führungssättel vorgesehen. Insbesondere können als Sattelaufnahme wenigstens zwei lange Führungsschienen angeordnet werden, also insbesondere eine obere und eine untere Führungsschiene, die sich zumindest teilweise innen an der Turmwandung in Umfangsrichtung erstrecken. Hieran können dann einer oder mehrere Führungssättel angeordnet werden und jeweils ein oder mehrere Spannseile führen oder aufnehmen. Dabei kann jeder Führungssattel in Umfangsrichtung entlang dieser Sattelaufnahme in seiner Position verändert, insbesondere verschoben werden. Hierdurch ist es besonders einfach möglich, wenige Sattelaufnahmen ggf. sogar nur eine Sattelaufnahme vorzusehen, gleichwohl mehrere Führungssättel vorzusehen.

Erfindungsgemäß wird zudem ein Turm einer Windenergieanlage gemäß Anspruch 7 vorgeschlagen. Dieser weist einen Betonabschnitt auf oder ist vollständig ein Betonturm und es ist eine Verspannung aus Spannseilen vorgesehen. Diese Spannseile sind außerhalb der Turmwand im Turminneren geführt. Dazu weist der Turm wenigstens eine Vorrichtung zum Führen von Spannseilen gemäß wenigstens einer oben beschriebenen Ausführungsformen auf.

Gemäß einer Weiterbildung des Turms sind die Führungsschienen der Vorrichtung zum Führen der Spannseile von innen an der Turmwand befestigt und sind jeweils an den Radius des Turms in der entsprechenden Höhe angepasst. Hierdurch kann die Befestigung des wenigstens einen Führungssattels auf einfache Art und Weise erfolgen. Das Vorsehen spezieller Elemente der Sattelaufnahme in dem Beton beim Gießen des jeweiligen Betonsegmentes ist nicht erforderlich. Außerdem könnte hierdurch auch noch die vorgesehene Position der Höhe nach variiert werden. Vorzugsweise sind diese Führungsschienen, die entsprechend Teil der Sattelaufnahme sind bzw. diese bilden, als dem entsprechenden Radius angepasste gebogene Winkelschienen vorgesehen. Entsprechend weist eine solche winkelförmige Schiene eine Fläche zum Befestigen an der Turmwand und eine Fläche auf, in der besonders Langlöcher zum verschiebbaren Befestigen des wenigstens einen Führungssattels vorgesehen sind. Durch solche von innen an der Turmwand zu befestigenden Führungsschienen eignet sich die Vorrichtung zum Führen von Spannseilen besonders gut als Nachrüstlösung.

Erfindungsgemäß wird zudem eine Windenergieanlage gemäß Anspruch 9 vorgeschlagen. Hierdurch kann eine Windenergieanlage auf einfache Art und Weise angeboten und errichtet und entsprechend verspannt werden.

Erfindungsgemäß wird außerdem ein Verfahren zum Errichten eines Turms einer Windenergieanlage und damit auch zum Errichten einer Windenergieanlage gemäß Anspruch 10 vorgeschlagen. Insbesondere wird hierbei zunächst der Betonturm bzw. Betonturmabschnitt errichtet und dann werden die Spannseile vorgesehen und gleichzeitig, vorher oder kurz danach werden Vorrichtungen zum Führen von Spannseilen gemäß wenigstens einer oben beschriebenen Ausführungsform an der Turmwandung von innen vorgesehen. Nun wird überprüft, wie die Spannseile fallen bzw. sich beim Spannen positionieren. Davon abhängig wird dann der entsprechende Führungssattel in Umfangsrichtung relativ zur Sattelaufnahme, insbesondere geführt durch die Sattelaufnahme verschoben, damit das betreffende Spannseil bzw. die betreffenden Spannseile an dem Führungssattel anliegen können. Nun kann das entsprechende Spannseil bzw. die entsprechenden Spannseile festgespannt werden und zumindest dieser Teil der Errichtung des Turms ist damit abgeschlossen.

Nachfolgend wird die vorliegende Erfindung exemplarisch anhand von Ausführungsbeispielen unter Bezugnahme auf die begleitenden Figuren näher erläutert.
- Figur 1: zeigt eine Windenergieanlagen in einer perspektivischen Ansicht.
- Figur 2: zeigt eine Vorrichtung zum Führen von Spannseilen in einer perspektivischen Darstellung.
- Figur 3: zeigt eine Draufsicht auf einen Turm einer Windenergieanlage in einer Schnittansicht.
- Figur 4: zeigt eine Vorrichtung zum Führen von Spannseilen gemäß einer weiteren Ausführungsform.

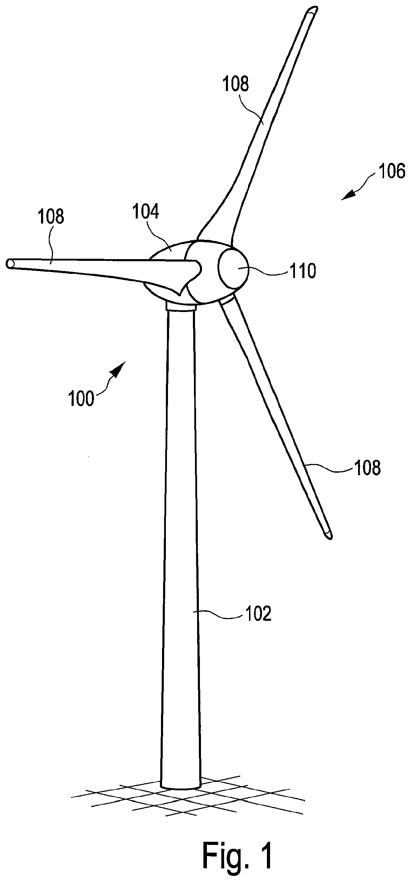

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

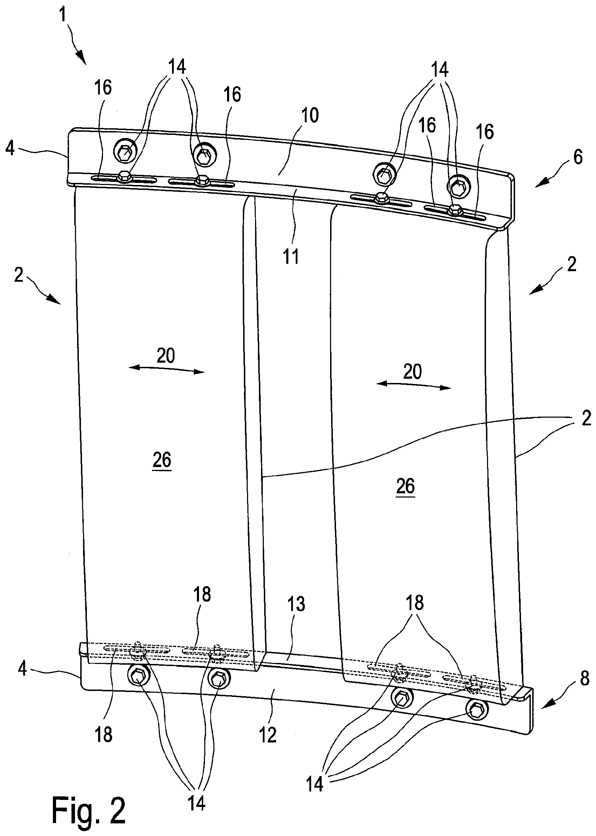

Figur 2 zeigt in einer perspektivischen Ansicht eine Vorrichtung zum Führen von Spannseilen, die vereinfachend auch als Führungsvorrichtung 1 bezeichnet werden kann. Diese Führungsvorrichtung 1 weist zwei Führungssättel 2 und eine Sattelaufnahme 4, bestehen aus einer oberen Führungsschiene 6 und einer unteren Führungsschiene 8, auf. Die Führungsvorrichtung 1 wird über die Sattelaufnahme 4, nämlich die beiden Führungsschienen 6 und 8 an einer Turminnenwand befestigt. Diese Situation ist in Figur 2 dargestellt, wobei die Turmwand nicht dargestellt ist. Es ist aber besonders an der oberen Führungsschiene 6 und der unteren Führungsschiene 8 die gebogene Form zu erkennen, die der Biegung, nämlich dem Innenradius der Turmwand an der Stelle jeweils entspricht.

Beide Führungsschienen 6 und 8 sind winklig ausgeführt und weisen jeweils einen Wandabschnitt 10 bzw. 12 zum Befestigen an der Turmwand und einen etwa jeweils rechtwinklig dazu angeordneten Sattelabschnitt 11 bzw. 13 auf, um daran wenigstens einen Führungssattel zu befestigen. Zur Befestigung an der Turmwand als auch zur Befestigung an dem wenigstens einen Führungssattel sind Befestigungsmittel 14 in Gestalt von Schrauben vorgesehen. Diese Befestigungsmittel 14 sind der Einfachheit halber mit demselben Bezugszeichen versehen, wobei sie zwischen oberer und unterer Führungsschiene 6 bzw. 8 unterschiedlich ausfallen können und auch für die Befestigung der Wandabschnitte 10 bzw. 12 anders ausfallen können als zur Befestigung des wenigstens einen Führungssattels an dem Sattelabschnitt 11 bzw. 13. Vorzugsweise werden hier jeweils als Befestigungsmittel Schrauben, ggf. mit unterschiedlicher Größe, vorgeschlagen, wie das in Figur 2 auch angedeutet ist.

Zur Befestigung der Führungssättel 2 sind nun in den Sattelabschnitten 11 und 13 jeweils Langlöcher 16 bzw. 18 vorgesehen. Die Langlöcher 18 der unteren Führungsschiene 8 und damit des unteren Sattelabschnitts 13 werden in dieser Darstellung durch die Führungssättel 2 verdeckt und sind daher nur gestrichelt angedeutet.

Die beiden Führungssättel 2 können nun zwischen den beiden Führungsschienen 6 und 8 und damit zwischen den beiden Sattelabschnitten 11 und 13 angeordnet und durch Befestigungsmittel 14 in den Langlöchern 16 und 18 befestigt werden. Solange die Befestigung noch locker ist, können die Führungssättel 2, nämlich jeder unabhängig voneinander, in Umfangsrichtung 20, die jeweils durch einen Doppelpfeil angedeutet ist, verschoben werden. Sobald die Führungssättel 2 jeweils an der gewünschten Position sind, können sie durch die entsprechenden Befestigungsmittel 14 fest fixiert werden.

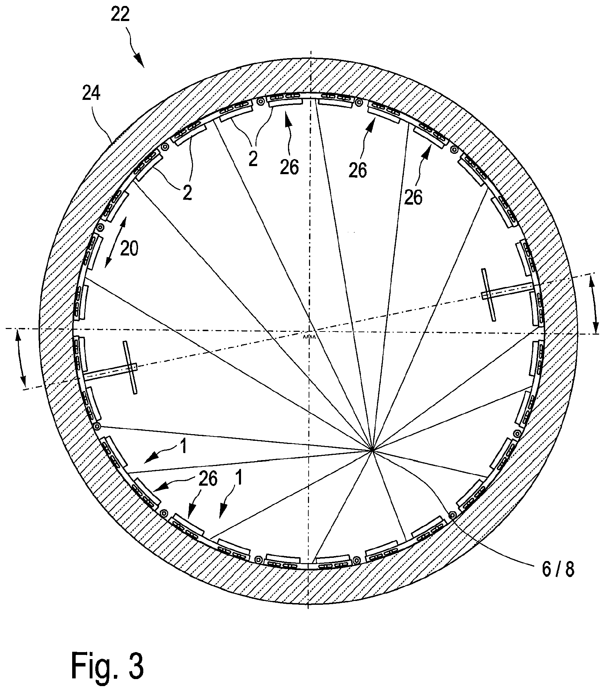

Der Turm 22 der Figur 3, der dort in einer Schnittansicht von oben dargestellt ist, weist diverse über seinen Umfang verteilte Führungssättel 2 auf, von denen immer zwei Stück zu einer Führungsvorrichtung 1 gehören. Jeweils zwei Führungssättel 2 sind über jeweils eine obere und eine untere Führungsschiene 6 bzw. 8 miteinander verbunden. Diese Bezugszeichen 6 und 8 sind in der Figur 3 verzeichnet, wobei jeweils die obere Führungsschiene 6 die untere Führungsschiene 8 verdeckt.

Jedenfalls sind die obere und untere Führungsschiene 6 und 8 von innen an der Turmwand 24, die auch als Turmwandung 24 bezeichnet werden kann, befestigt. Es können nun die Spannseile angeordnet werden und jeweils an Aufnahmeflächen 26 jedes Führungssattels 2 anliegen.

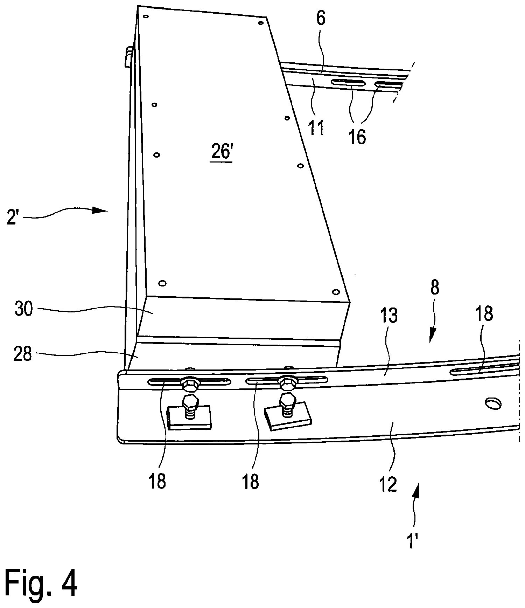

Figur 4 zeigt einen Führungssattel 2' zusammen mit einer oberen und unteren Führungsschiene 6 bzw. 8 vor dem Zusammenbau zu einer Führungsvorrichtung 1'. Auch die gemäß Figur 4 vorgesehene Führungsvorrichtung 1' weist bestimmungsgemäß zwei Führungssättel 2' auf. Der zweite Führungssattel 2' ist dabei in Figur 4 nicht dargestellt.

In Figur 4 ist besonders von der unteren Führungsschiene 8 der Wandabschnitt 12 und der Sattelabschnitt 13 mit Langlöchern 18 zu erkennen. Von der oberen Führungsschiene 6 ist der Sattelabschnitt 11 mit zwei Langlöchern 16 zu erkennen.

Der Führungssattel 2' weist hier einen Hauptkörper 28 auf, der jeweils an den Sattelabschnitten 11 bzw. 13 zu befestigen ist und bestimmungsgemäß an einer Turmwand bzw. Turmwandung von innen anliegt, also an einer Turminnenwand. Der Hauptkörper 28 ist außerdem mit einem Ausgleichskörper 30 versehen, der hier die Aufnahmefläche 26' bildet. Durch diesen Ausgleichskörper 30, der auch aus mehreren Einzelkörpern gebildet werden kann, erhält der Führungssattel 2' eine größere Dicke und kann dadurch einen größeren Abstand zwischen Turmwandung und Spannseil erreichen bzw. ausgleichen.

Somit wird auf einfache Art und Weise eine besonders leicht anzufertigende und an Toleranzen adaptierbare Führungsvorrichtung geschaffen, die Spannseile im Turminneren führen kann. Sie ist gleichermaßen auch zum Nachrüsten geeignet.

## Patentansprüche

1. Vorrichtung zum Führen von Spannseilen in einem Turm (22) einer Windenergieanlage, umfassend
- wenigstens einen Führungssattel (2) zum Anordnen in dem Turm (22) zwischen einer Turmwand (24) und wenigstens einem der Spannseile, so dass das wenigstens eine Spannseil an dem Führungssattel (2) anliegt und dadurch an der Turmwand (24) geführt wird, **dadurch gekennzeichnet, dass** die Vorrichtung weiterhin umfasst:
- eine Sattelaufnahme (4) zum Befestigen des Führungssattels (2) an der Turmwand (24), wobei
der Führungssattel (2) in seiner Position in Umfangsrichtung (20) des Turms (22) entlang der Sattelaufnahme (4) veränderbar ist, um an die Position des wenigstens einen Spannseils angepasst zu werden.

2. Vorrichtung nach Anspruch 1, **dadurch gekennzeichnet, dass** der Führungssattel (2) zum Anlegen des wenigstens einen Spannseils eine flache Auflagefläche ohne Begrenzung in Umfangsrichtung (20) hat.

3. Vorrichtung nach Anspruch 1 oder 2, **dadurch gekennzeichnet, dass** der Führungssattel (2) in Umfangsrichtung (20) entlang der Sattelaufnahme (4) verschiebbar ist.

4. Vorrichtung nach einem der vorstehenden Ansprüche, **dadurch gekennzeichnet, dass** die Sattelaufnahme (4) eine obere und eine untere Führungsschiene aufweist oder daraus gebildet ist, um den Führungssattel (2) in Umfangsrichtung (20) verschiebbar aufzunehmen.

5. Vorrichtung nach einem der vorstehenden Ansprüche, **dadurch gekennzeichnet, dass** die obere und die untere Führungsschiene (6, 8) unterschiedliche Radien, nämlich unterschiedliche Krümmungsradien aufweist, um sich in unterschiedlichen Höhen im Turm (22) dort an den jeweiligen Turmradius anzupassen.

6. Vorrichtung nach einem der vorstehenden Ansprüche, **dadurch gekennzeichnet, dass** die Sattelaufnahme (4) zum Befestigen mehrerer Führungssättel (2) vorgesehen ist und die Vorrichtung mehrere Führungssättel umfasst.

7. Turm (22) einer Windenergieanlage mit einem Betonabschnitt und einer Verspannung aus Spannseilen, wobei die Spannseile außerhalb der Turmwand (24), im Turminneren geführt sind und der Turm wenigstens eine Vorrichtung gemäß einem der vorstehenden Ansprüche zum Führen der Spannseile aufweist.

8. Turm (22) nach Anspruch 7, **dadurch gekennzeichnet, dass** die Führungsschienen (6, 8) der wenigstens einen Vorrichtung zum Führen der Spannseile von innen an der Turmwandung (24) befestigt sind und jeweils an den Radius des Turmes (22) in der entsprechenden Höhe angepasst sind.

9. Windenergieanlage mit einem Turm (22) gemäß Anspruch 7 oder 8.

10. Verfahren zum Errichten einer Windenergieanlage mit einem Turm (22), mit einem Betonabschnitt und einer Verspannung aus Spannseilen, wobei die Spannseile außerhalb der Turmwand (24), im Turminneren geführt werden und zum Führen der Spannseile wenigstens eine Vorrichtung gemäß einem der Ansprüche 1 bis 6 verwendet wird, ein Turm (22) gemäß Anspruch 7 oder 8 errichtet wird und/oder eine Windenergieanlage gemäß Anspruch 9 errichtet wird.

## Claims

1. Device for guiding bracing cables in a tower (22) of a wind turbine, comprising:
- at least one guide bracket (2) to be arranged in the tower (22) between a tower wall (24) and at least one of the bracing cables, such that the at least one bracing cable bears against the guide bracket (2) and is thereby guided along the tower wall (24), **characterized in that** the device further comprises:
- a bracket mount (4) for attaching the guide bracket (2) to the tower wall (24), wherein
the position of the guide bracket (2) in the circumferential direction (20) of the tower (22) along the bracket mount (4) can be changed in order to match the position of the at least one bracing cable.

2. Device according to Claim 1, **characterized in that** the guide bracket (2) has, for bearing the at least one bracing cable, a flat mounting surface which is not bounded in the circumferential direction (20).

3. Device according to Claim 1 or 2, **characterized in that** the guide bracket (2) can be displaced along the bracket mount (4) in the circumferential direction (20).

4. Device according to one of the preceding claims, **characterized in that** the bracket mount (4) has or is formed from an upper and a lower guide rail, in order that the guide bracket (2) can be attached displaceably in the circumferential direction (20).

5. Device according to one of the preceding claims, **characterized in that** the upper and the lower guide rail (6, 8) have different radii, specifically different radii of curvature, in order to match the respective tower radius at different heights in the tower (22).

6. Device according to one of the preceding claims, **characterized in that** the bracket mount (4) is provided for attaching multiple guide brackets (2) and the device has multiple guide brackets.

7. Tower (22) of a wind turbine having a concrete section and braced by bracing cables, wherein the bracing cables are guided outside the tower wall (24), inside the tower, and wherein the tower comprises at least one device according to one of the preceding claims for guiding the bracing cables.

8. Tower (22) according to Claim 7, **characterized in that** the guide rails (6, 8) of the device for guiding the bracing cables are secured to the tower wall (24) from the inside and match the respective radius of the tower (22) at the corresponding height.

9. Wind turbine having a tower (22) according to Claim 7 or 8.

10. Method for erecting a wind turbine having a tower (22) having a concrete section and braced by bracing cables, wherein the bracing cables are guided outside the tower wall (24), inside the tower, and, for guiding the bracing cables, use is made of at least one device according to one of Claims 1 to 6, a tower (22) according to Claim 7 or 8 is erected and/or a wind turbine according to Claim 9 is erected.

## Revendications

1. Dispositif de guidage de câbles tendeurs dans un mât (22) d'une éolienne, comprenant
- au moins un chariot de guidage (2) à agencer dans le mât (22) entre une paroi de mât (24) et au moins un des câbles tendeurs, de sorte que l'au moins un câble tendeur s'applique sur le chariot de guidage (2) et est ainsi guidé au niveau de la paroi de mât (24), **caractérisé en ce que** le dispositif comprend en outre :
- un logement de chariot (4) pour fixer le chariot de guidage (2) au niveau de la paroi de mât (24), dans lequel
la position du chariot de guidage (2) peut être modifiée dans la direction circonférentielle (20) du mât (22) le long du logement de chariot (4) pour être adaptée à la position de l'au moins un câble tendeur.

2. Dispositif selon la revendication 1, **caractérisé en ce que** le chariot de guidage (2) a une surface d'appui plane sans délimitation dans la direction circonférentielle (20) pour l'application de l'au moins un câble tendeur.

3. Dispositif selon la revendication 1 ou 2, **caractérisé en ce que** le chariot de guidage (2) est coulissant dans la direction circonférentielle (20) le long du logement de chariot (4).

4. Dispositif selon l'une quelconque des revendications précédentes, **caractérisé en ce que** le logement de chariot (4) présente un rail de guidage supérieur et un rail de guidage inférieur ou en est formé pour recevoir de manière coulissante le chariot de guidage (2) dans la direction circonférentielle (20).

5. Dispositif selon l'une quelconque des revendications précédentes, **caractérisé en ce que** le rail de guidage supérieur et le rail de guidage inférieur (6, 8) présentent différents rayons, à savoir différents rayons de courbure, pour s'adapter à différentes hauteurs dans le mât (22) au rayon de mât respectif.

6. Dispositif selon l'une quelconque des revendications précédentes, **caractérisé en ce que** le logement de chariot (4) est prévu pour la fixation de plusieurs chariots de guidage (2) et le dispositif comprend plusieurs chariots de guidage.

7. Mât (22) d'une éolienne avec une section en béton et un haubanage en câbles tendeurs, dans lequel les câbles tendeurs sont guidés à l'extérieur de la paroi de mât (24), à l'intérieur du mât et le mât présente au moins un dispositif selon l'une quelconque des revendications précédentes pour le guidage des câbles tendeurs.

8. Mât (22) selon la revendication 7, **caractérisé en ce que** les rails de guidage (6, 8) de l'au moins un dispositif de guidage des câbles tendeurs sont fixés de l'intérieur sur la paroi de mât (24) et sont adaptés respectivement au rayon du mât (22) à la hauteur correspondante.

9. Éolienne avec un mât (22) selon la revendication 7 ou 8.

10. Procédé de construction d'une éolienne avec un mât (22), avec une section en béton et un haubanage en câbles tendeurs, dans lequel les câbles tendeurs sont guidés à l'extérieur de la paroi de mât (24), à l'intérieur du mât et au moins un dispositif selon l'une quelconque des revendications 1 à 6 est utilisé pour le guidage des câbles tendeurs, un mât (22) selon la revendication 7 ou 8 est construit et/ou une éolienne selon la revendication 9 est construite.
